# FASCICULE DE BREVET EUROPEEN

(11) **EP 1 830 081 B1**
(45) Date de publication et mention de la délivrance du brevet: **16.09.2009**
(21) Numéro de dépôt: 07102887.2
(22) Date de dépôt: 22.02.2007
(51) Int. Cl.: F16C 32/04, F16C 19/52, G01P 3/44

(54) **Palier magnétique actif chemisé**
Aktives Magnetlager mit Auskleidung
Active magnetic bearing with sleeve

(30) Priorité: 27.02.2006 FR 0650671
(43) Date de publication de la demande: 05.09.2007
(73) Titulaire: SOCIETE DE MECANIQUE MAGNETIQUE, F-27950 Saint-Marcel (FR)
(72) Inventeur: Baudelocque, Luc, 27200 Vernon (FR); Lapierre, Armand, 27120 Fontaine sous Jouy (FR); Brunet, Maurice, 27950 Sainte Colombe près Vernon (FR); Lacour, Michel, 27200 Vernon (FR)
(74) Mandataire: Thévenet, Jean-Bruno

(56) Documents cités:
- EP-A1- 0 097 590
- GB-A- 1 257 423
- GB-A- 2 365 346

## Description

La présente invention concerne un palier magnétique actif chemisé selon le préambule de la revendication 1.

Un tel palier magnétique actif chemisé est connu du document EP 0 097 590 A.

Les applications du palier magnétique pour machines tournantes se développent de plus en plus, en particulier pour les applications relatives au gaz naturel et pour des applications de gaz corrosifs.

Aujourd'hui de nombreuses applications utilisent déjà le gros avantage du palier magnétique de pouvoir fonctionner directement dans le gaz de procédé de la machine considérée, sans étanchéité. Cela est vrai sur les turboexpanders de traitement de gaz naturel, sur les compresseurs frigorifiques, sur les moteurs électriques d'entraînement de compresseur, etc.

Il reste néanmoins certaines conditions à remplir dans les cas où le gaz est soit acide, soit corrosif, soit est porteur de particules.

Dans ces cas, il est impératif de protéger les bobinages du palier et du détecteur associé par des technologies d'étanchéité ou de protection anti-corrosion.

Ces techniques peuvent être :
- soit des imprégnations de vernis réalisées sous vide et pression, assurant à l'ensemble une quasi-étanchéité vis-à-vis de l'ambiance,
- soit des paliers chemisés consistant à protéger la partie stator du palier et du détecteur par une chemise métallique en matériau inoxydable et non corrodable.

La technique des paliers chemisés a déjà été utilisée industriellement sur des compresseurs de stockage de gaz naturel, avec la mise en oeuvre d'une chemise métallique unique destinée à protéger à la fois le palier proprement dit et le détecteur qui lui est associé.

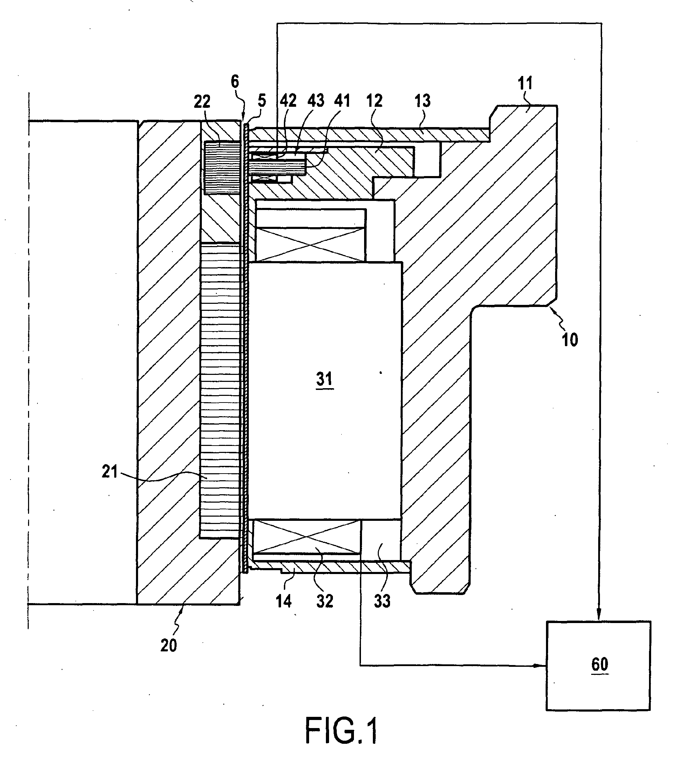

La Figure 1 illustre un exemple de palier magnétique actif radial chemisé connu.

Une armature de palier 21 en matériau magnétique feuilleté est solidaire du rotor 20 qui est en contact avec le gaz de procédé. De façon similaire, une armature de détecteur 22 en matériau magnétique feuilleté est rapportée sur le rotor 20 et est également en contact avec le gaz de procédé.

Un entrefer 6 de l'ordre de 0,3 à 0,5 mm assure une séparation entre la partie périphérique du rotor 20 équipé des armatures 21 et 22 et une chemise unique 5 qui est fixe et rapportée sur un boîtier commun 11, 12, 13, 14 qui incorpore à la fois le stator de palier et le stator de détecteur.

Le stator de palier comprend des enroulements d'électroaimants 32 associés à une culasse 31 en matériau magnétique feuilleté qui présente des pièces polaires d'extrémité en contact avec la chemise 5 qui délimite l'entrefer de palier 6.

Le stator de détecteur comprend également des enroulements d'électro-aimants 42 associés à une culasse 41 en matériau magnétique feuilleté qui est en contact avec la chemise unique 5.

Un produit de surmoulage 33, 43 peut être injecté à l'intérieur du boîtier étanche 10 comprenant les pièces 11, 12, 13, 14 et la chemise 5, afin de noyer les enroulements d'électro-aimants 32, 42 dans le produit de surmoulage afin de renforcer la tenue mécanique.

Les enroulements d'électro-aimants 32, 42 du palier et du détecteur sont reliés à des circuits électroniques de commande 60 qui peuvent être placés à l'extérieur de boîtier du palier.

L'utilisation d'une chemise unique 5 pour définir une paroi étanche au niveau à la fois du palier et du détecteur associé, conduit à réaliser une chemise 5 de longueur relativement importante qui peut poser des problèmes de dilatations thermiques différentielles entre la chemise et le boîtier de palier.

Par ailleurs, l'utilisation d'une seule chemise commune au palier et au détecteur conduit en général à des problèmes de couplages électriques et magnétiques, en particulier dans les gammes de fréquences moyennes supérieures à 300 Hz. Ces couplages ont une grande influence négative sur les fonctions de transfert des systèmes de commande des paliers magnétiques.

La chemise commune 5 est réalisée en un matériau métallique non magnétique afin que le détecteur inductif ne perde pas toute sa sensibilité à cause de la présence de la chemise de protection 5.

Les épaisseurs de la chemise 5, pour résister aux conditions de fonctionnement (pression, variation rapide de pression, température, résistance à la corrosion et à l'abrasion) sont en général de 0,3 à 0,5 mm, c'est-à-dire qu'elles sont similaires à l'entrefer propre du palier magnétique.

La présence d'une telle chemise 5 en matériau non magnétique revient ainsi à augmenter l'entrefer du palier de l'ordre de 100%, ce qui conduit à une limitation importante de la charge disponible dudit palier.

La présente invention a pour but de remédier aux inconvénients précités tout en conservant le très grand bénéfice du principe des paliers chemisés.

Ces buts sont atteints grâce à un palier magnétique actif chemisé selon la revendication 1.

Selon une caractéristique particulière, la première chemise est soudée sur un premier boîtier étanche contenant le stator de palier et la deuxième chemise est soudée sur un deuxième boîtier étanche contenant le stator de détecteur.

Avantageusement, le premier boîtier étanche contenant le stator de palier et le deuxième boîtier étanche contenant le stator de détecteur sont reliés entre eux de façon étanche dans une zone éloignée des première et deuxième chemises.

Les premier et deuxième boîtiers étanches sont remplis d'un produit de surmoulage.

Selon un mode de réalisation préférentiel, l'armature de palier et l'armature de détecteur sont constituées de tôles magnétiques de faible épaisseur réalisées dans un matériau identique à celui de la première chemise.

Toutefois, selon un autre mode de réalisation possible, l'armature de palier et l'armature de détecteur sont constituées de tôles fer-silicium recouvertes d'une couche de protection anti-corrosion de type nickel, chrome ou céramique.

L'invention est applicable aussi bien à un palier radial qu'à un palier axial ou encore à un palier combinant un palier radial et un palier axial tel qu'un palier de type conique.

L'invention est utile en particulier dans le cas où le détecteur de position de type inductif est alimenté avec une porteuse dont la fréquence est comprise entre 20 et 40 kHz.

L'invention permet de conserver un entrefer classique, avec des valeurs comprises entre environ 0,3 et 0,5 mm, entre la première chemise et l'armature de palier, sans que la charge disponible du palier soit réduite par la présence des première et deuxième chemises.

D'autres caractéristiques et avantages de l'invention ressortiront de la description suivante de modes particuliers de réalisation de l'invention, en référence aux dessins annexés, donnés à titre d'exemples, sur lesquels :
- la Figure 1 est une vue en demi-coupe axiale d'un exemple de palier magnétique actif chemisé selon l'art antérieur, et
- la Figure 2 est une vue en demi-coupe axiale d'un exemple de palier magnétique actif chemisé conformément à la présente invention.

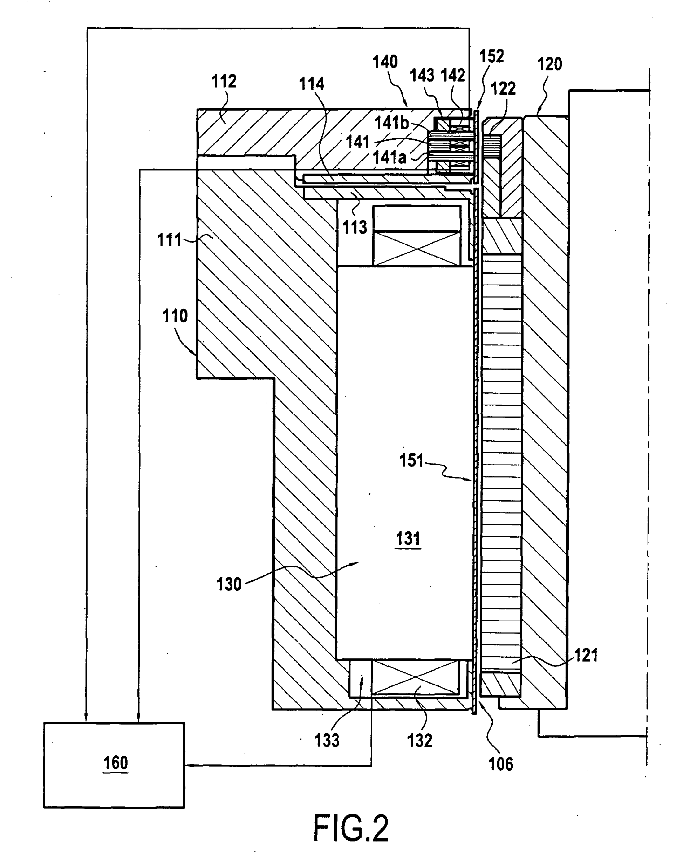

Si l'on se réfère à la Figure 2, on voit un rotor 120 de machine tournante qui est conçu pour être en contact avec un gaz de procédé, qui peut être acide, corrosif ou porteur de particules.

La machine tournante peut être par exemple un turboexpander de traitement de gaz naturel, un compresseur frigorifique, un moteur électrique d'entraînement de compresseur.

Une armature de palier 121 en matériau magnétique feuilleté est rapportée sur le rotor 120. Cette armature 121 peut en particulier utiliser le matériau inoxydable 17/4 PH qui existe en tôles de faible épaisseur, notamment une épaisseur de 0,2 mm.

Une armature de détecteur 122, également an matériau magnétique feuilleté, est rapportée sur le rotor 120, au voisinage de l'armature de palier 121. Cette armature 122 peut, comme l'armature 121, être réalisée en un matériau inoxydable 17/4 PH.

Un entrefer 106 présentant une épaisseur par exemple comprise entre 0,3 et 0,5 mm est ménagé entre d'une part la partie périphérique du rotor 120 équipée de l'armature de palier 121 et l'armature de détecteur 122 et d'autre part une première chemise 151 constituant une chemise de palier et une deuxième chemise 152 constituant une chemise de détecteur.

La première chemise 151 est soudée de façon étanche sur des pièces 113, 111 constituant avec cette première chemise 151 un boîtier étanche dans lequel sont disposés les éléments constituant le stator du palier magnétique, à savoir des enroulements d'électro-aimants 132 associés à une culasse 131 en matériau magnétique feuilleté.

La culasse 131 comporte des pièces polaires d'extrémité qui sont en contact avec la chemise de palier 151, dont l'épaisseur est avantageusement comprise entre 0,3 et 0,5 mm.

La première chemise 151 est réalisée en un matériau anti-corrosion magnétique, ce qui évite de diminuer de façon sensible la capacité de charge du palier.

Un produit de surmoulage 133 est introduit à l'intérieur du boîtier de palier 111, 113 pour remplir les espaces libres et augmenter la tenue mécanique. Le produit de surmoulage 133 qui remplit notamment les espaces libres ménagés autour des enroulements 132 d'électroaimants de palier, peut être introduit avec un procédé du type vide et pression de manière à garantir un remplissage total et parfait.

L'étanchéité du boîtier de palier 111, 113 associé à la chemise de palier 151 est assurée par soudage de la chemise 151 sur le boîtier de palier 111, 113 qui est constitué d'un matériau compatible avec celui de la chemise 151 ou même de préférence identique à celui-ci.

L'armature de palier 121 ainsi que l'armature 122 du détecteur peuvent être réalisées à l'aide de tôles magnétiques de faible épaisseur qui sont en un matériau identique à celui de la chemise de palier 151, tel que par exemple un acier inoxydable du type 17/4 PH ou équivalent.

A titre de variante, l'armature de palier 121 peut être constituée de tôles fer-silicium recouvertes d'une couche de protection anti-corrosion du type nickel, chrome ou céramique.

Un détecteur de position comprend un stator qui est disposé dans un second boîtier 112, 114 distinct du premier boîtier 111, 113 et fermé par une deuxième chemise 152 qui est soudée de façon étanche sur les pièces 112, 114 du second boîtier.

Le stator du détecteur de position comprend des enroulements d'électro-aimants 142 associés à une culasse 141 en matériau magnétique feuilleté.

Dans l'exemple de la Figure 2, la culasse 141 comprend deux empilements 141a, 141b munis chacun d'enroulements d'électro-aimants 142, chacun des empilements 141a, 141b étant placé en regard de l'armature 122 de telle manière qu'en position de repos il soit placé pour moitié en regard de l'armature de détecteur 122 et pour moitié en regard d'une portion extérieure non magnétique du rotor qui permet au détecteur de jouer le double rôle de détecteur de position radiale et de détecteur de position axiale.

La deuxième chemise 152 est réalisée en un matériau anti-corrosion non magnétique. Elle peut présenter une épaisseur comprise entre 0,3 et 0,5 mm.

Les extrémités des empilements 141a, 141b de la culasse 141 sont en contact avec la deuxième chemise 152.

La deuxième chemise 152 est soudée aux pièces 112, 114 du boîtier de détecteur qui est distinct du premier boîtier 111, 113 et est réalisé en un matériau compatible avec celui de la chemise 152.

Comme dans le cas du stator de palier, un produit de surmoulage 143 est introduit à l'intérieur du boîtier de détecteur 112, 114 pour remplir les espaces libres et augmenter la tenue mécanique. Le produit de surmoulage 143, qui joue le même rôle que le produit de surmoulage 133 précédemment décrit, peut être introduit selon le même procédé.

De préférence, le premier boîtier étanche 111, 113 contenant le stator de palier et le deuxième boîtier étanche 112, 114 contenant le stator de détecteur sont reliés entre eux de façon étanche dans une zone éloignée des première et deuxième chemises 151, 152.

Sur la Figure 2, on voit ainsi que les première et deuxième chemises 151, 152 sont soudées respectivement sur des pièces 113, 114 qui présentent un écartement entre elles et sont reliées à une autre pièce 111 respectivement 112 constituant le corps du boîtier de palier respectivement le corps du boîtier de détecteur.

Les pièces 111 et 112 qui appartiennent respectivement au boîtier de palier et au boîtier de détecteur sont reliées entre elles de façon étanche, par exemple par soudure, à une certaine distance des zones dans lesquelles les extrémités des première et deuxième chemises 151, 152 sont soudées respectivement sur les pièces 113 et 114.

La séparation physique de la chemise de palier 151 et de la chemise de détecteur 152 évite tous les problèmes de couplage entre le palier et le détecteur et donc toutes les limitations du dispositif électronique 160 de commande du palier magnétique qui pourraient être liées à ces couplages. La conception du dispositif électronique de commande 160, auquel sont reliés les enroulements 132 du stator de palier et les enroulements 142 de stator de détecteur, peut ainsi être simplifiée.

Le détecteur de position 140 de type inductif peut être alimenté avec une porteuse dont la fréquence est comprise entre 20 et 40 kHz. La chemise 152, qui est en matériau non magnétique, peut être conductrice ou non, mais n'apporte pas de perte de sensibilité significative, ce qui permet de conserver une grande fiabilité au système de suspension magnétique.

La description qui précède a été décrite en référence à un palier magnétique de type radial, mais s'applique de la même manière à un palier magnétique de type axial ou à un palier magnétique de type conique combinant les fonctions de palier radial et de palier axial.

L'ensemble étanche 110 constitué du boîtier de palier avec la première chemise 151 et du boîtier du détecteur avec la deuxième chemise 152 peut être raccordé de façon étanche au reste du carter constituant une enceinte étanche entourant le rotor 120 en contact avec un gaz de procédé.

## Revendications

1. Palier magnétique actif chemisé pour machine tournante équipée d'un rotor (120) en contact avec un gaz de procédé et placé dans une enceinte étanche, le palier magnétique (140) comprenant une armature de palier (121) en matériau magnétique feuilleté solidaire du rotor (120) et placée à l'intérieur de ladite enceinte étanche, un stator de palier composé d'enroulements d'électro-aimants (132) associés à une culasse (131) en matériau magnétique feuilleté qui présente des pièces polaires d'extrémité disposées à faible distance de ladite armature de palier (121), mais sans contact avec celle-ci, le stator de palier étant disposé en dehors de ladite enceinte étanche, au moins un détecteur de position (140) du type électromagnétique comprenant une armature de détecteur (122) en matériau magnétique feuilleté montée sur le rotor (120) à l'intérieur de l'enceinte étanche et un stator de détecteur comprenant des enroulements d'électro-aimants (142) associés à une culasse (141) en matériau magnétique feuilleté, le stator de détecteur étant disposé en dehors de ladite enceinte étanche, et des circuits électroniques de commande (160) reliés auxdits enroulements d'électroaimants (132) de palier et auxdits enroulements d'électro-aimants (142) de détecteur,
le stator de palier étant protégé par une première chemise (151) en matériau anti-corrosion magnétique qui constitue une partie de ladite enceinte étanche et est solidaire dudit stator de palier, et le stator de détecteur étant protégé par une deuxième chemise (152) en matériau anti-corrosion non magnétique qui constitue une partie de ladite enceinte étanche et est solidaire dudit stator de détecteur **caractérisé en ce que** la première chemise (151) est réalisée en acier inoxydable magnétique du type 17/4 PH et **en ce que** la deuxième chemise (152) est réalisée en l'un des matériaux constitués par un acier inoxydable non magnétique du type AISI 304, 304L, 316 ou 316L, l'Inconel ou un superalliage.

2. Palier magnétique actif selon la revendication 1, **caractérisé en ce que** les première et deuxième chemises (151, 152) présentent une épaisseur comprise entre 0,3 et 0,5 mm.

3. Palier magnétique actif selon la revendication 1 ou la revendication 2, **caractérisé en ce que** la première chemise (151) est soudée sur un premier boîtier étanche (111, 112) contenant le stator de palier et la deuxième chemise (152) est soudée sur un deuxième boîtier étanche (112, 114) contenant le stator de détecteur.

4. Palier magnétique actif selon la revendication 3, **caractérisé en ce que** le premier boîtier étanche (111, 113) contenant le stator de palier et le deuxième boîtier étanche (112, 114) contenant le stator de détecteur sont reliés entre eux de façon étanche dans une zone éloignée des première et deuxième chemises (151, 152).

5. Palier magnétique actif selon l'une quelconque des revendications 3 et 4, **caractérisé en ce que** les premier et deuxième boîtiers étanches (111, 113 et 112, 114) sont remplis d'un produit de surmoulage.

6. Palier magnétique actif selon l'une quelconque des revendications 1 à 5, **caractérisé en ce que** l'armature de palier (121) et l'armature de détecteur (122) sont constituées de tôles magnétiques de faible épaisseur réalisées dans un matériau identique à celui de la première chemise (151).

7. Palier magnétique actif selon l'une quelconque des revendications 1 à 5, **caractérisé en ce que** l'armature de palier (121) et l'armature de détecteur (122) sont constituées de tôles fer-silicium recouvertes d'une couche de protection anti-corrosion de type nickel, chrome ou céramique.

8. Palier magnétique actif selon l'une quelconque des revendications 1 à 7, **caractérisé en ce qu'**il constitue un palier radial.

9. Palier magnétique actif selon l'une quelconque des revendications 1 à 7, **caractérisé en ce qu'**il constitue un palier axial.

10. Palier magnétique actif selon l'une quelconque des revendications 1 à 9, **caractérisé en ce que** le détecteur de position (144) de type inductif est alimenté avec une porteuse dont la fréquence est comprise entre 20 et 40 kHz.

11. Palier magnétique actif selon l'une quelconque des revendications 1 à 10, **caractérisé en ce que** l'entrefer de palier magnétique situé entre la première chemise (151) et l'armature de palier (121) est compris entre 0,3 et 0,5 mm.

## Claims

1. A jacketed active magnetic bearing for a rotary machine having a rotor (120) in contact with a process gas and placed in a leaktight enclosure, the magnetic bearing (140) comprising a bearing armature (121) of laminated magnetic material secured to the rotor (120) and placed inside said leaktight enclosure, a bearing stator made up of electromagnet windings (132) associated with a yoke (131) of laminated magnetic material that presents end pole pieces disposed at a short distance from said bearing armature (121) but without making contact therewith, the bearing stator being disposed outside said leaktight enclosure, at least one position detector (140) of the electromagnetic type comprising a detector armature (122) of laminated magnetic material mounted on the rotor (120) inside the leaktight enclosure and a detector stator comprising electromagnet windings (142) associated with a yoke (141) of laminated magnetic material, the detector stator being disposed outside said leaktight enclosure, and electronic control circuits (160) connected to said bearing electromagnet windings (132) and to said detector electromagnet windings (142),
the bearing stator being protected by a first jacket (151) of magnetic anti-corrosion material which constitutes a portion of said leaktight enclosure and is secured to said bearing stator, and the detector stator being protected by a second jacket (152) of non-magnetic anti-corrosion material that constitutes a portion of said leaktight enclosure and that is secured to said detector stator, **characterized in that** the first jacket (151) is made of magnetic stainless steel of the 17/4 PH type, and **in that** the second jacket (152) is made of one of the materials constituted by a non-magnetic stainless steel of the AISI 304, 304L, 316, or 316L type, of Inconel, or of a superalloy.

2. An active magnetic bearing according to claim 1, **characterized in that** the first and second jackets (151, 152) present thickness lying in the range 0.3 mm to 0.5 mm.

3. An active magnetic bearing according to claim 1 or claim 2, **characterized in that** the first jacket (151) is welded on a first leaktight housing (111, 112) containing the bearing stator and the second jacket (152) is welded on a second leaktight housing (112, 114) containing the detector stator.

4. An active magnetic bearing according to claim 3, **characterized in that** the first leaktight housing (111, 113) containing the bearing stator and the second leaktight housing (112, 114) containing the detector stator are interconnected in leaktight manner in a zone that is remote from the first and second jackets (151, 152).

5. An active magnetic bearing according to claim 3 or claim 4, **characterized in that** the first and second leaktight housings (111, 113 and 112, 114) are filled with a potting compound.

6. An active magnetic bearing according to any one of claims 1 to 5, **characterized in that** the bearing armature (121) and the detector armature (122) are made of thin magnetic laminations made of material identical to that of the first jacket (151).

7. An active magnetic bearing according to any one of claims 1 to 5, **characterized in that** the bearing armature (121) and the detector armature (122) are made of silicon iron laminations covered in an anti-corrosion protection layer of the nickel, chromium, or ceramic type.

8. An active magnetic bearing according to any one of claims 1 to 7, **characterized in that** it constitutes a radial bearing.

9. An active magnetic bearing according to any one of claims 1 to 7, **characterized in that** it constitutes an axial bearing.

10. An active magnetic bearing according to any one of claims 1 to 9, **characterized in that** the position detector (144) of the inductive type is fed with a carrier at a frequency lying in the range 20 kHz to 40 kHz.

11. An active magnetic bearing according to any one of claims 1 to 10, **characterized in that** the airgap of the magnetic bearing situated between the first jacket (151) and the bearing armature (121) lies in the range 0.3 mm to 0.5 mm.

## Patentansprüche

1. Aktives Magnetlager mit Auskleidung für eine umlaufende Maschine, welche mit einem Rotor (120), der mit einem Prozeßgas in Berührung ist und in einem abgedichteten Gehäuse angeordnet ist, ausgestattet ist, wobei das Magnetlager:
eine Lagerhülle (121) aus einem mehrschichtigen magnetischen, mit dem Rotor (120) verbundenen Material, welche im Inneren des abgedichteten Gehäuses angeordnet ist,
einen Stator des Lagers, bestehend aus Spulen eines Elektromagneten (132), welche zusammen mit einem Joch (131) aus einem mehrschichtigen magnetischen Material mit Feldpolen, die einen kleinen Abstand zur Lagerhülle (121) haben, diese aber nicht berühren, angeordnet sind, wobei der Stator des Lagers außerhalb des abgedichteten Gehäuses angeordnet ist,
mindestens einen elektromagnetischen Abstandsfühler, umfassend eine Fühlerhülle (122) aus einem mehrschichtigen magnetischen Material, welche auf dem Rotor (120) im Inneren des abgedichteten Gehäuses angeordnet ist, und einen Stator des Fühlers umfassend Spulen eines Elektromagneten (142), welche zusammen mit einem Joch (141) aus einem mehrschichtigen magnetischen Material angeordnet sind, wobei der Stator des Lagers außerhalb des abgedichteten Gehäuses angeordnet ist, und
elektronische Steuerungsschaltungen (160), welche mit den Spulen eines Elektromagneten (132) des Lagers und den Spulen eines Elektromagneten (142) des Fühlers verbunden sind, umfaßt,
wobei der Stator des Lagers durch eine erste Auskleidung (151) aus einem magnetischen Korrosionsschutzmaterial, welches einen Teil des abgedichteten Gehäuses bildet und mit dem Stator des Lagers verbunden ist, geschützt ist und der Stator des Fühlers durch eine zweite Auskleidung (152) aus einem nicht-magnetischen Korrosionsschutzmaterial, welches einen Teil des abgedichteten Gehäuses bildet und mit dem Stator des Fühlers verbunden ist, geschützt ist,
**dadurch gekennzeichnet, daß**
die erste Auskleidung (151) aus einem rostfreien magnetischen Stahl des Typs 17/4 PH gefertigt ist und die zweite Auskleidung (152) aus einem der folgenden Materialien gefertigt ist: einem rostfreien nicht-magnetischen Stahl des Typs AISI 304, 304L, 316, 316L, Inconel oder einer Superlegierung.

2. Aktives Magnetlager nach Anspruch 1,
**dadurch gekennzeichnet, daß**
die erste und die zweite Auskleidung (151, 152) eine Dicke zwischen 0,3 und 0,5 mm aufweisen.

3. Aktives Magnetlager nach Anspruch 1 oder 2,
**dadurch gekennzeichnet, daß**
die erste Auskleidung (151) auf eine erste abgedichtete Buchse (111, 113), welche den Stator des Lagers enthält, geschweißt ist und die zweite Auskleidung (152) auf eine zweite abgedichtete Buchse (112, 114), welche den Stator des Fühlers enthält, geschweißt ist.

4. Aktives Magnetlager nach Anspruch 3,
**dadurch gekennzeichnet, daß**
die erste abgedichtete Buchse (111, 113), welche den Stator des Lagers enthält, und die zweite abgedichtete Buchse (112, 114), welche den Stator des Fühlers enthält, zusammen luftdicht verbunden sind in einem Bereich, welcher von der ersten und zweiten Auskleidung (151, 152) entfernt liegt.

5. Aktives Magnetlager nach Anspruch 3 oder 4,
**dadurch gekennzeichnet, daß**
die erste und die zweite abgedichtete Buchse (111, 113 und 112, 114) mit einer Gußmasse gefüllt sind.

6. Aktives Magnetlager nach einem der Ansprüche 1 bis 5,
**dadurch gekennzeichnet, daß**
die Lagerhülle (121) und die Fühlerhülle (122) aus dünnen magnetischen Blechen des gleichen Materials wie die erste Auskleidung (151) gefertigt sind.

7. Aktives Magnetlager nach einem der Ansprüche 1 bis 5,
**dadurch gekennzeichnet, daß**
die Lagerhülle (121) und die Fühlerhülle (122) aus Eisen-Silicium-Blechen, welche mit einer Nickel-, Chrom- oder keramischen Korrosionsschutzschicht überzogen sind, gefertigt sind.

8. Aktives Magnetlager nach einem der Ansprüche 1 bis 7,
**dadurch gekennzeichnet, daß**
es ein Radiallager ist.

9. Aktives Magnetlager nach einem der Ansprüche 1 bis 7,
**dadurch gekennzeichnet, daß**
es ein Axiallager ist.

10. Aktives Magnetlager nach einem der Ansprüche 1 bis 9,
**dadurch gekennzeichnet, daß**
der induktive Abstandsfühler (140) mit einem Träger, dessen Frequenz zwischen 20 und 40 kHz ist, eingespeist ist.

11. Aktives Magnetlager nach einem der Ansprüche 1 bis 10,
**dadurch gekennzeichnet, daß**
der Luftspalt des Magnetlagers zwischen der ersten Auskleidung (151) und der Lagerhülle (121) zwischen 0,3 und 0,5 mm ist.
